# EUROPEAN PATENT APPLICATION

(11) **EP 2 073 516 A1**
(43) Date of publication of application: **24.06.2009**
(21) Application number: 07124006.3
(22) Date of filing: 21.12.2007
(51) Int. Cl.: H04M 1/725, G06Q 10/00

(54) **Method, system and mobile device for registering voice data with calendar events of a calendaring application**

(71) Applicant: Research In Motion Limited, Waterloo, Ontario N2L 3W8 (CA)
(72) Inventor: May, Darrell Reginald, Waterloo Ontario N2V 2K6 (CA); Sundberg, Kevin, Kitchener Ontario N2N 3P5 (CA)
(74) Representative: Rickard, David John

(57) **Abstract**

The application relates to registering voice data with a calendar event such as a meeting or an appointment of a calendaring application of a mobile device.
In most network environments, groupware is executed on a groupware server that facilitates shared work on documents and information, provides for message exchange and storage, and provides for calendaring, task management and file collaboration etc. When a meeting event is created, shared workspace for the meeting event is established.
In this case, users invited to the meeting have access to the shared workspace allowing the users to store, review, modify data stored in the shared workspace. When an invitee to a meeting for which a shared workspace gas been created records a voice message associated with the meeting event, the recorder voice message is typically transferred to a data sever and stored thereon using a nomenclature that identifies the voice message. Unfortunately, the process of storing the voice data on the data server and subsequently creating a link in the calendar object is cumbersome and can lead to misfiled of misassociated voice data.
This problem is solved by the present application in that a mobile device records the voice message and associates it with the meeting event on the mobile device before both is synchronized with the data server.

## Description

The method, system and mobile device disclosed herein, relate generally to the registration of voice data with calendar events.

Recording digital audio data and in particular, digital voice data is commonplace. Most voice-mail systems allow callers to leave voice-mail messages for users who do not answer incoming calls. When recording a voice-mail message or the like, the voice-mail message left by the caller is typically processed to remove noise and stored in memory. To reduce memory requirements, the digital voice data is often encoded and compressed prior to storage. Many formats for encoding and compressing digital audio data exist such as for example, MP3, digital speech standard ("DSS"), WAV, GSM that is used to encode voice data for transmission over cellular telephone networks, ADPCM, OGG, WMA, VOX, etc.

Recording digital voice-mail messages associated with unanswered incoming calls is of course not the only environment in which digital voice-data is recorded. In most network environments, groupware is excecuted on a groupware server that facilitates shared work on documents and information, provides for message exchange and storage, and provides for calendaring, task management and file collaberation etc. When a meeting event is created, a shared workspace for the meeting event is often established. In this case, users invited to the meeting have access to the shared workspace allowing the users to store, review, modify data stored in the shared workspace. When an invitee to a meeting for which a shared workspace has been created records a voice message associated with the meeting event, the recorded voice message is typically transferred to a data server and stored thereon using a nomenclature that identifies the voice message. For example, the nomenclature may identify the date and type of meeting as follows "\\data\voice\2006\05\23\boardmeeting.wav". In order to associate further the voice message with the meeting, a link to the voice message stored on the data server is sometimes placed in the calendar object on the groupware server that represents the meeting. Unfortunately, the process of storing the voice data on the data server and subsequently creating a link in the calendar object is cumbersome and can lead to misfiled or misassociated voice data.

There currently does not exist a simple, standard way for registering voice data associated with calendar events. It is therefore an object of the present invention to provide a novel method, system and mobile device for registering voice data with calendar events.

### GENERAL

Accordingly, in one aspect there may be provided a method of registering voice data with a calendar event, comprising recording voice data using a mobile device; and associating the recorded voice data with the calendar event using the mobile device.

In one embodiment, the method may further comprise prompting a user to confirm that voice data is to be recorded during the calendar event once the calendar even has been launched by the mobile device. The recording and associating may be performed when voice data recording is confirmed. The user may also be prompted to confirm that recorded voice data is to be associated with the calendar event. The associating may be performed when calendar event association is confirmed. The voice data recording prompting and voice data associating prompting may both be performed prior to voice data recording. The voice data associating may comprise updating a calendar object representing the calendar event to include a link to the recorded voice data. The updated calendar object and recorded voice data may be communicated from the mobile device to a remote server. The communicating may be performed over one of a wireless, wired and wireless/wired network. The user may be prompted to confirm that the updated calendar object and recorded voice data is to be communicated and the communicating is performed when confirmed. The remote server may store the voice data and updates the calendar object to reflect its location. The updated calendar object may be communicated from the remote server to either devices such as for example other mobile devices or desktop computers.

In accordance with another aspect, there may be provided a mobile device for registering voice data with a calendar event, comprising a microphone receiving audio signals during the calendar event, a processing unit converting input audio signals received from the microphone into digital voice data and memory storing the voice data and a calendar object representing the calendar event during which the voice data was recorded. The processing unit may associate the voice data with the calendar event.

In accordance with yet another aspect, there may be provided a system for registering voice data with a calendar event, comprising a mobile device registering voice data and associating registered voice data with the calendar event by updating a calendar object and a server receiving the registered voice data and the calendar object from the mobile device. The server may update the calendar object and makes the registered voice data associated with the calendar event available to others.

### Brief Description of the Drawings

Embodiments will now be described more fully with reference to the accompanying drawings in which:

Figure 1 is a schematic diagram of a communications system;

Figure 2a is a schematic block diagram of a mobile device;

Figure 2b is a front elevational view of the mobile device;

Figure 3 is a flowchart showing the steps performed during registration of voice data with a calendar event;

Figure 4 is a flowchart showing the steps performed during recording of voice data during the calendar event;

Figure 5 illustrates the user interface displayed by the mobile device when a calendar event commences;

Figure 6 illustrates the user interface displayed by the mobile device when voice data is recorded during the calendar event;

Figure 7 illustrates the user interface displayed by the mobile device when the user has elected to record voice data during the calendar event;

Figure 8 is a flowchart showing the steps performed during transfer of recorded voice data to a server;

Figure 9 illustrates the user interface displayed by the mobile device when a connection is detected by the mobile device;

Figure 10 illustrates the user interface displayed by the mobile device when an updated calendar event identifying available voice data is received; and

Figure 11 illustrates the user interface displayed by the mobile device during playback of calendar event voice data.

### Description of Preferred Embodiments

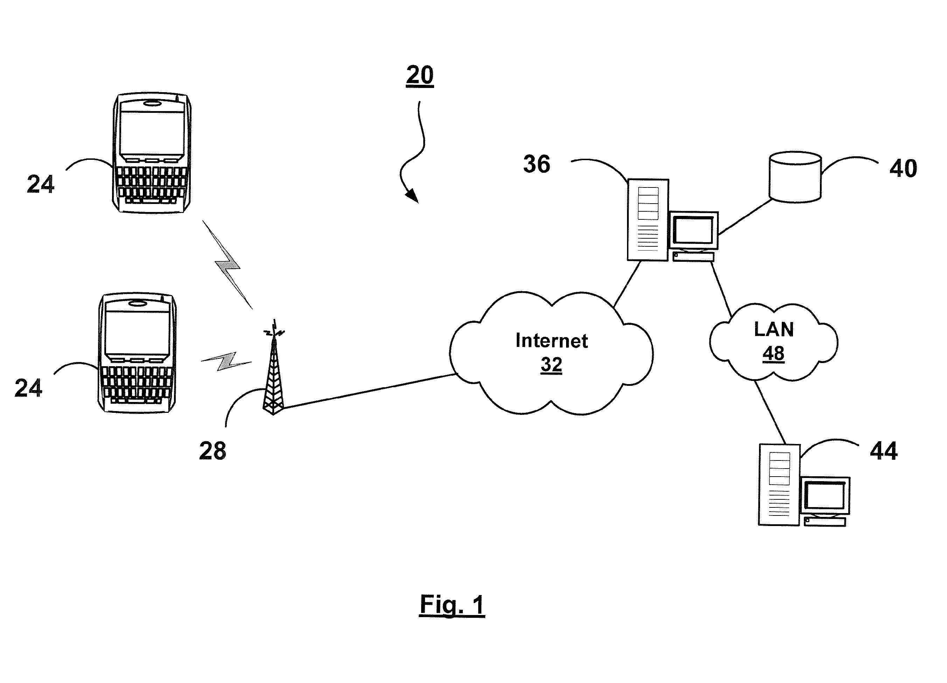

Turning now to Figure 1, a communications system is shown and is generally identified by reference numeral 20. As can be seen, in this embodiment two mobile devices 24 are in communication with a cellular antenna 28. The mobile devices 24 are capable of communication via a number of interfaces, including cellular radio, Bluetooth and universal serial bus ("USB") cable, and have voice data registration capabilities. The cellular antenna 28 is in communication with the Internet 32 via a number of components present in the infrastructure of a cellular service provider (not shown). A groupware server 36 is also in communication with the Internet 32. The groupware server 36 includes an information store 40. A computer 44, in this case a desktop computer, is in communication with the groupware server 36 over a wired or wireless local area network ("LAN") 48. Those of skill in the art will appreciate that the number of illustrated components in Figure 1 is for ease of illustration. Typically, communications system 20 will include large numbers of mobile devices 24, cellular antennas 28 and computers 44. The communications system 20 may also include multiple groupware servers 36 and information stores 40.

The groupware server 36 runs groupware, such as Lotus Notes® or Microsoft Exchange®. As mentioned previously, the groupware facilitates shared work on documents and information, provides for message exchange and store, calendaring, task management, file collaboration, etc. As is known, the calendaring functionality allows users to schedule calendar events, either alone or collaboratively. Calendar events can include for example, meetings, conference calls, appointments, etc. Users can schedule calendar events and invite other users to participate in the calendar events. Upon accepting an invitation to a calendar event, the calendar event appears in the calendar of both the user who scheduled the calendar event and each invitee who has accepted the invitation to the calendar event; that is, the attendees.

In addition, the groupware server 36 runs Research In Motion Blackberry Enterprise Server ("BES") that coordinates the transmission of data to and from the mobile devices 24. Thus, in this embodiment the BES and groupware are resident physically on the same server.

The groupware executed by the groupware server 36 is object-oriented. As a result, calendar events created by users are stored in the information store 40 as calendar objects. Files of various types are also stored by the groupware server 36 for collaborative sharing between users generally as well as for collaborative sharing only between attendees of the same meeting. These files are also stored in the information store 40 and are registered by the groupware server 36 as objects.

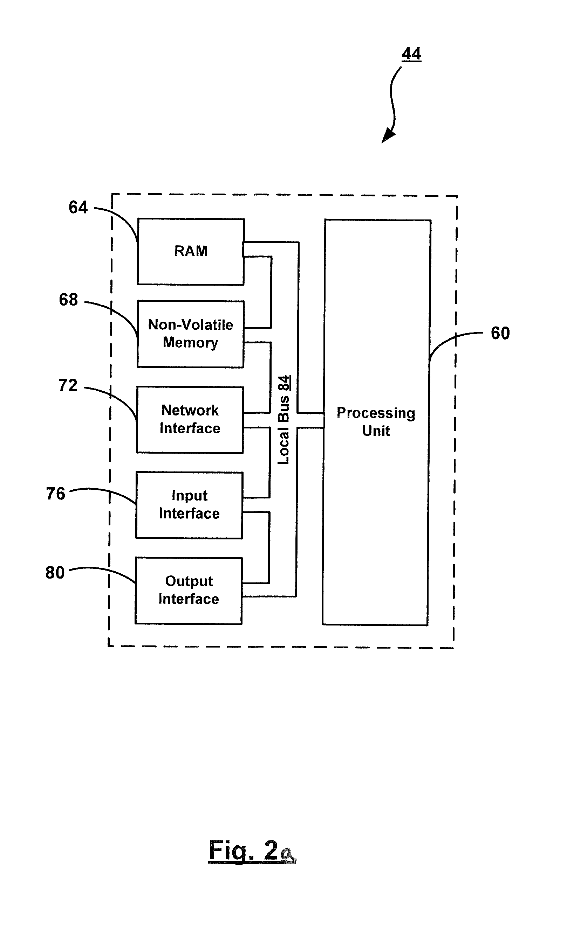

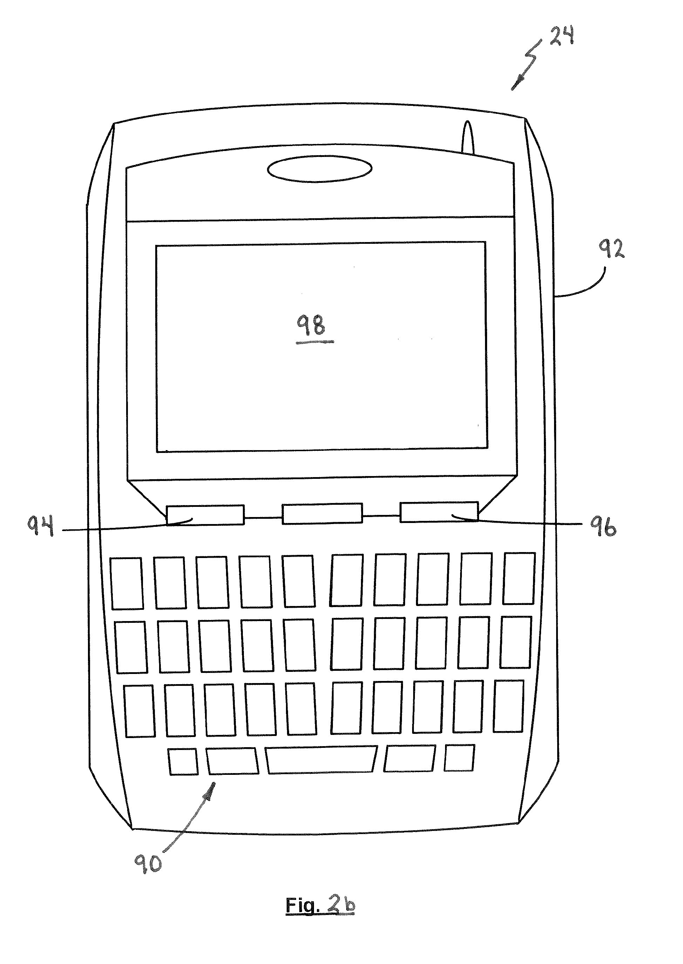

Turning now to Figures 2a and 2b, one of the mobile devices 24 is illustrated. In this embodiment, the mobile device 24 comprises a processing unit 60 in communication with volatile random access memory ("RAM") 64, non-volatile memory 68, a network interface 72, an input interface 76 and an output interface 80 over a local bus 84. The processing unit 60 is a low-power-consumption processor, such as an Intel ARM processor. The processing unit 60 executes an operating system and applications stored in non-volatile memory 68 that are required to provide telephony and personal information management ("PIM") functionality, which includes email exchange, calendaring, contact and task management, etc. The processing unit 60 also executes voice data recording software. The non-volatile memory 68 can comprise additional memory in the form of an external memory card, such as a flash or MMC card, inserted into the mobile device 24. The network interface 72 in this embodiment comprises cellular network, Bluetooth and USB cable interfaces. The input interface 76 comprises a microphone for receiving voice data, a QWERTY keyboard 90, a recessed thumb wheel 92, input buttons 94 and 96 and a number of other controls that permit user interaction with the mobile device 24. The output interface 80 comprises a 284 by 284 pixels color display screen 98, and a speaker.

The groupware server 36 maintains a profile for each mobile device user, including email folders, a calendar, task lists, notes, etc. The mobile device 24 also maintains this profile information in a local store within the non-volatile memory 68. When a change is made to the profile information on the mobile device 24, the change is propagated to the groupware server 36 via a synchronization applet that executes on the mobile device 24 and watches for such profile changes. Similarly, changes made on the groupware server 36 to the profile information stored for the mobile device user are propagated to the mobile device 24 via push technology. The mobile device 24 and the groupware server 36 communicate and synchronize PIM information, such as contacts and calendar events, via the known compressed iCal, or "CiCal" protocol. This protocol is based on the iCal standard, and defines how calendar events are communicated between the mobile device 24 and the groupware server 36. In this manner, the profile information stored on the mobile device 24 and the groupware server 36 remains synchronized.

The groupware server 36 also maintains a profile for each desktop computer user. An organizer application run by the desktop computer 44 stores a local copy of the profile information. As the desktop computer 44 is typically in constant communication with the groupware server 36 via a LAN connection, the profile information associated with desktop computer users is synchronized frequently.

Each mobile device 24 can be connected to a desktop computer 44 via a USB cable in order to synchronize PIM data and other information, such as user files, browser pages and cache, user settings, etc. When a mobile device 24 is connected to the desktop computer 44, the mobile device 24 can communicate indirectly with the groupware server 36.

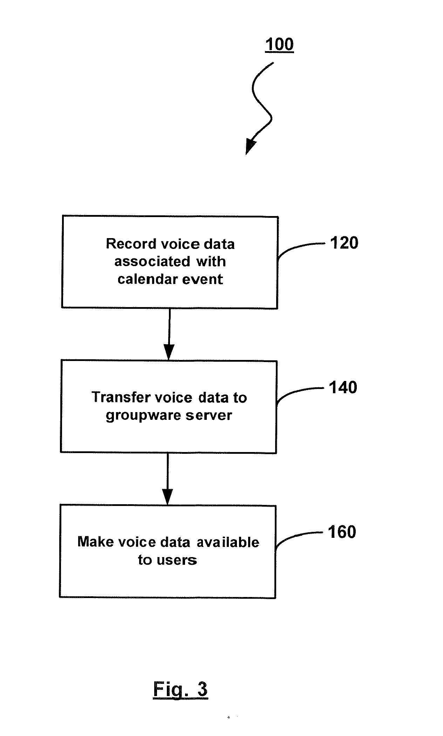

Figure 3 is a flowchart showing the steps performed when a mobile device user opts to register voice data with a calendar event in the mobile device user's profile. When the user conditions the mobile device 24 to record voice data associated with the calendar event and records a voice message (step 120), the recorded voice message is transferred from the mobile device 24 to the groupware server 36 (step 140). The groupware server 36 in turn makes the recorded voice message available to other attendees of the calendar event (step 160).

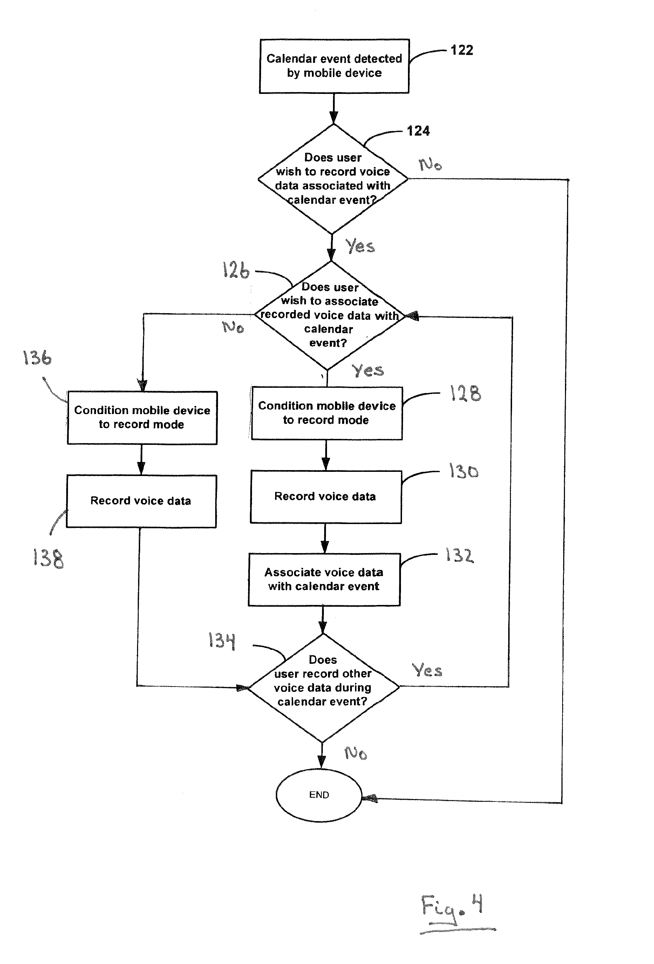

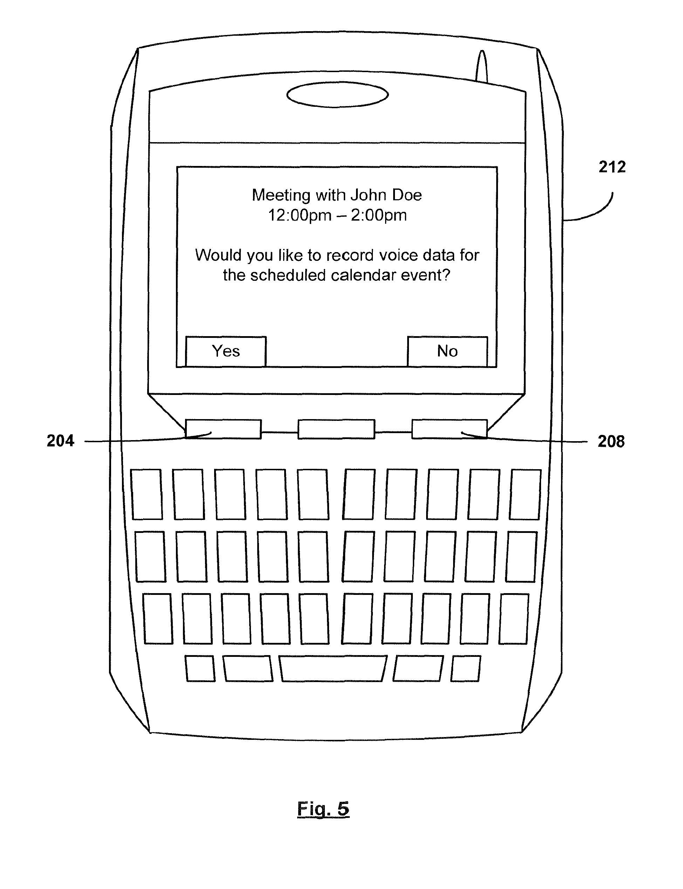

Figure 4 illustrates the steps performed during recording of the voice message at step 120. When a calendar event for the mobile device user is launched by the mobile device 24 (step 122), the mobile device user is visually prompted to select whether voice data associated with the calendar event is to be recorded (step 124). Figure 5 shows the user interface that is presented to the mobile device user at step 124 on the display screen 98. In this example, the user is presented with the calendar event name and is asked whether voice data for the calendar event is to be recorded. In response to the prompt, the user can use button 94 or 96 or the recessed thumb wheel 92 to select one of the presented "yes" or "no" options.

If the user selects the "no" option indicating that voice data for the calendar event is not to be recorded, the voice data registration procedure is terminated. The mobile device 24 however, remains aware that the calendar event exists.

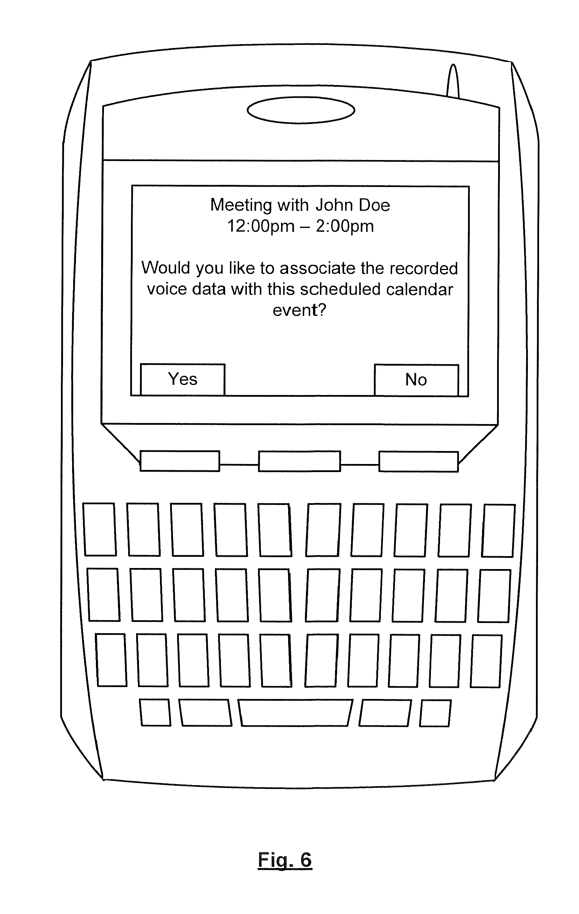

At step 124, if the user selects the "yes" option confirming that voice data for the calendar event is to be recorded, the user is visually prompted to confirm that the voice data to be recorded, is to be associated with the calendar event (step 126). Figure 6 shows the user interface that is presented to the user of the mobile device 24 on the display screen 98 when the user opts to associate recorded voice data for the calendar event. As can be seen, the user is presented with the calendar event name and is asked whether or not the voice data that is to be recorded, is to be associated with the calendar event. In response to the prompt, the user can select one of the presented "yes" or "no" options in manner described above.

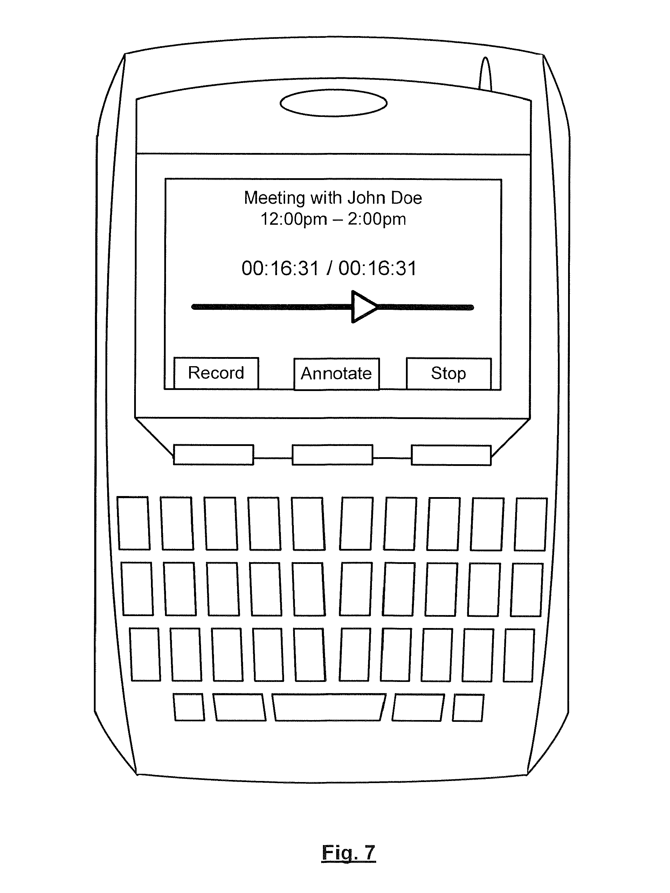

At step 126, if the user selects the "yes" option confirming that the recorded voice data is to be associated with the calendar event, the mobile device 24 is conditioned to a record mode (step 128). In the record mode, the user is presented with a user interface as shown in Figure 7 that allows the user to start, stop, pause and annotate voice data recording. During recording of voice data (step 130), the recorded voice data is stored as a file in the non-volatile memory 68 of the mobile device 24. Once recording of voice data has been terminated, the recorded voice data is associated with the calendar event (step 132). In order to associate the recorded voice data with the calendar event, the mobile device 24 appends to the calendar object representing the calendar event, a link to the location of the voice data stored in the non-volatile memory 68. Upon associating the voice data with the calendar event, the method proceeds to step 134 and the user is presented with a prompt on the display screen 98 asking whether other voice data for the calendar event is to be recorded. In response to the prompt, the user can select one of presented "yes" or "no" options in the same manner described above. If the user selects the "no" option, the voice data registration procedure is terminated. If the user selects the "yes" option, the voice data registration procedure returns to step 126.

At step 126, if the user selects the "no" option, the mobile device 24 is still conditioned to the record mode (step 136) allowing the user to record voice data (step 138). Upon termination of voice data recording, the recorded voice data is stored as a file in the non-volatile memory 68 but is not associated with the calendar event. The voice data registration procedure then proceeds to step 134.

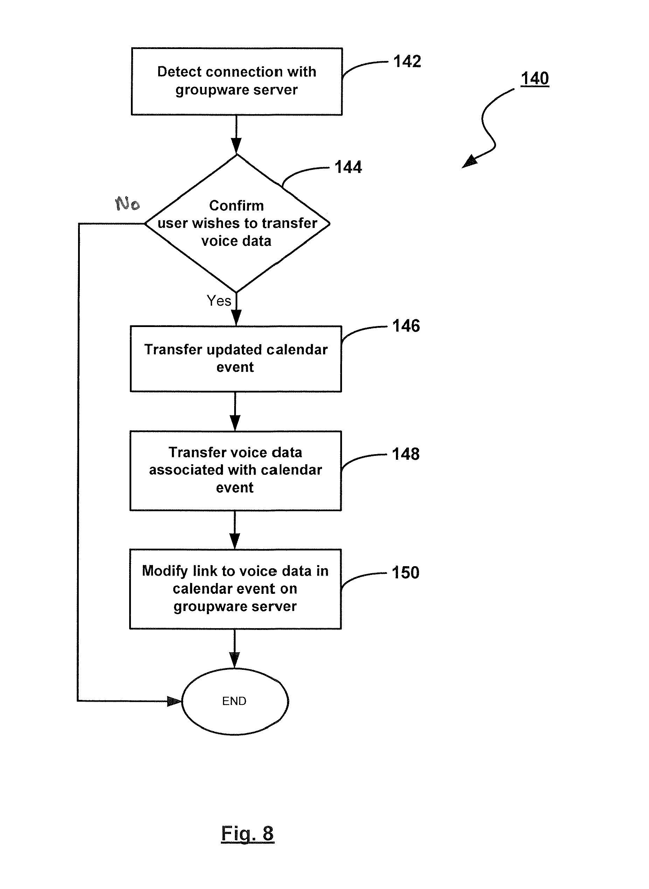

Figure 8 illustrates the steps performed during transfer of recorded voice data associated with a calendar event from the mobile device 24 to the groupware server 36. When a connection with the groupware server 36 is to be established, the mobile device 24 looks to establish either a cellular radio connection directly to the groupware server 36 via the cellular communications module or a connection indirectly to the groupware server 36 via a Bluetooth or USB connection with desktop computer 44. In particular, the mobile device 24 initially attempts to establish a cellular radio connection directly to the groupware server 36 via the cellular communications module. If the cellular radio connection cannot be established, the mobile device 24 attempts to establish an indirect connection to the groupware server 36 via a Bluetooth connection with the desktop computer 44. If this indirect connection cannot be established, the mobile device 24 attempts to establish an indirect connection to the groupware server 36 via a USB connection with the desktop computer 44.

Upon establishing a connection to the groupware server 36 (step 142), the synchronization applet on the mobile device 24 determines what objects require synchronization. This includes any recorded voice data associated with calendar events. The mobile device user is then visually prompted to confirm whether the recorded voice data is to be transferred to the groupware server 36 (step 144).

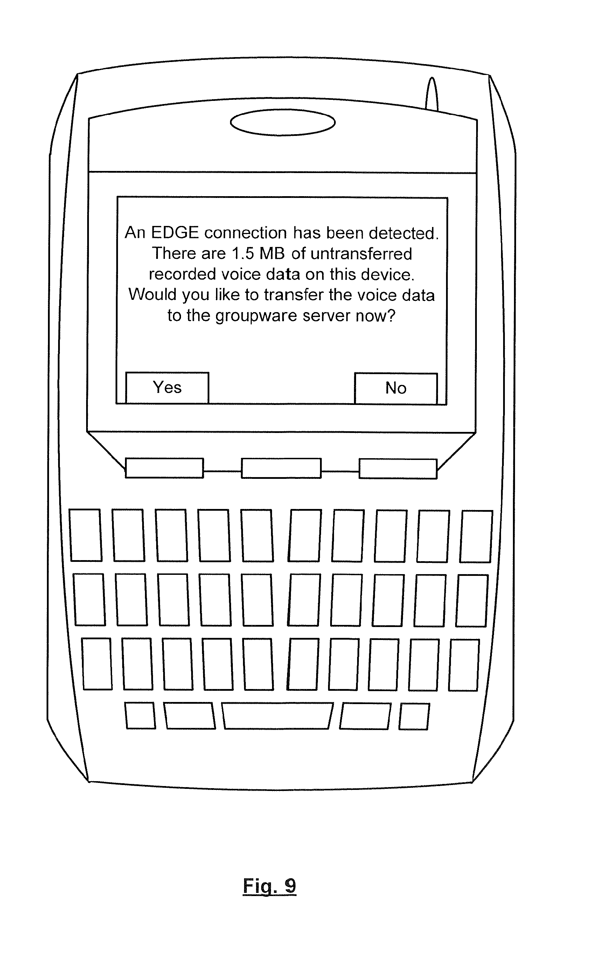

Figure 9 illustrates the user interface presented on the display screen 98 of the mobile device 24 to the user upon detecting a connection to the groupware server 36. The user is informed of the type of connection established with the groupware server 36. In this example, the connection is an EDGE connection over a cellular network. In addition, the user is informed how much voice data has not yet been transferred to the groupware server 36. The user is also asked whether or not the recorded voice data is to be transferred at this time. In response to the prompt, the user can select one of the presented "yes" or "no" options in the manner previously described. Where the amount of voice data is large, the cost of transmitting data across the detected connection type may be significant. The user may wish to postpone transferring the voice data to the groupware server 36 until a less costly connection is established with the groupware server 36 by selecting the "no" option.

If the user selects the "no" option signifying that no voice data is to be transferred, the voice data transfer method ends. If the user selects the "yes" option signifying that recorded voice data is to be transferred to the groupware server 36, the updated calendar object representing the calendar event with which the voice data is associated, including the link to the voice data, is transferred from the mobile device 24 to the groupware server 36 (step 146). The voice data associated with the calendar event is also transferred from the mobile device 24 to the groupware server 36 (step 148). Upon receipt of the transmitted voice data, the groupware server 36 stores the voice data in the information store 40. The groupware server 36 also examines the transferred calendar object and modifies the link in the calendar object so that it reflects the location of the voice data stored in the information store 40 (step 150).

In order to make the voice data available to other users, once the voice data has been stored in the information store 40, and the calendar object representing the calendar event with which the voice data is associated has been modified to include a link to the voice data, the groupware server 36 sends updated information for the calendar object to each attendee. The updated calendar object includes the link to the voice data stored in the information store 40. Depending on the attendees, the updated calendar object may be received by one or more users of other mobile devices 24 or one or more users of desktop computers 44. Upon receiving the updated calendar object and downloading the voice data, a user can listen to the recorded voice data associated with the calendar event by selecting the link to the voice data. When the link to the voice data is selected, the mobile device 24 presents the user with a user interface that visually prompts the user to confirm that the recorded voice data is to be downloaded to the mobile device 24.

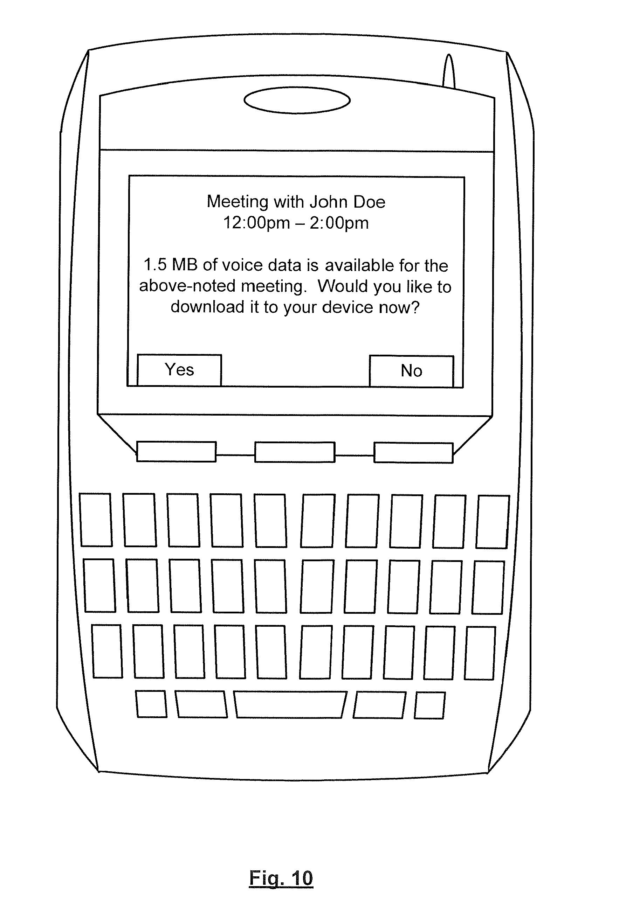

Figure 10 illustrates the user interface presented by the mobile device 24 when an updated calendar object that indicates voice data is available has been received and selected. As the cost of sending and receiving data over a cellular network can be significant and as available memory on the mobile device 24 can be limited, the user is presented with the size of the voice data and asked to confirm that the voice data is to be downloaded to the mobile device 24. In response to the prompt, the user can select one of the presented "yes" or "no" options in the same manner described previously.

If the user selects the "yes" option signifying that the voice data is to be downloaded to the mobile device, the voice data is communicated by the groupware server 36 to the mobile device 24 and stored in the non-volatile memory 68. The voice data is stored in such a manner by the mobile device 24 so as to represent a cached copy of the voice data stored on the groupware server 36.

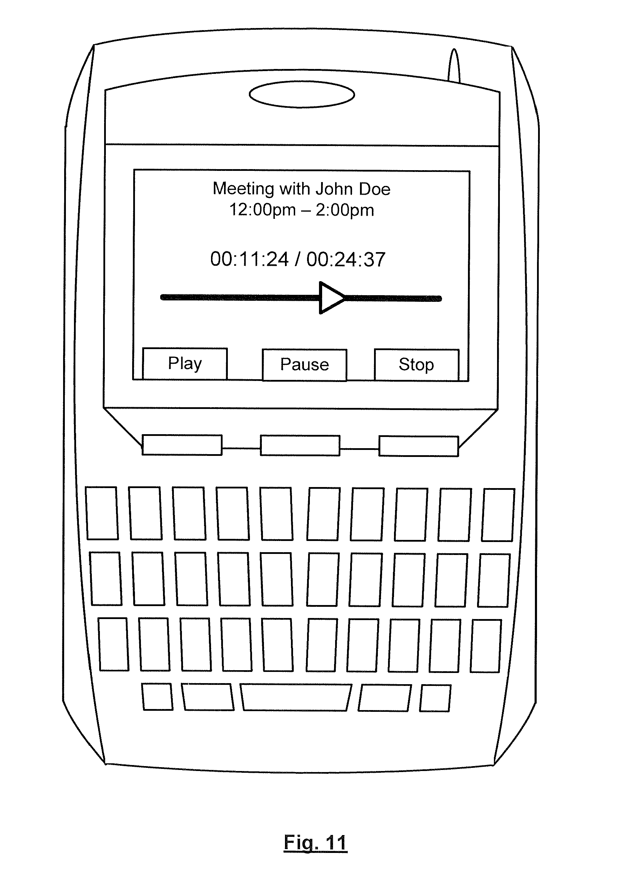

Figure 11 illustrates the user interface presented on the display screen 98 of the mobile device 24 when the voice data has been downloaded and is ready for playback. The interface allows the user to play, pause and stop the playback using various buttons of the mobile device 24.

While the above-described embodiment makes specific reference to the Research In Motion platform, those of skill in the art will appreciate that other mobile data delivery platforms can be employed. The mobile devices can communicate the voice data to the groupware server via other types of wireless connections, such as WiFi, Infrared, and the like or may be limited to communicating the voice data to the groupware server 36 via a wired connection.

When the user of a mobile device 24 has recorded voice data and that user does not have administrative rights to modify the calendar object, the user may be provided with delegate rights to modify the calendar object. In such cases, the mobile device 24 can send a notification that it is recording voice data for the calendar event to the groupware server 36. In turn, the groupware server 36 can send a request to attendees of the calendar event authorized to modify rights to provide the user of the mobile device 24 with delegate rights for the calendar object representing the calendar event. Alternatively, the attendees with modify rights can be provided with a list of attendees and asked to approve or deny editing rights for the purpose of submitting voice data for the calendar event.

If desired, when voice data has been recorded, the mobile device 24 that has recorded the voice data can update the calendar object representing the calendar event to indicate that voice data has been recorded prior to transmission of the voice data to the groupware server 36. In this case, upon receipt of the updated calendar object, the groupware server 36 modifies the calendar object to indicate that voice data is forthcoming. This may occur when the user has elected to postpone transfer of the voice data to the groupware server 36 until such time that the mobile device 24 can communicate the voice data via a cheaper connection, such as via a USB cable. In this manner, other users can be notified that there is pending voice data associated with the calendar event before the voice data is available.

The mobile device 24 can be provided with a set of rules for transferring and receiving voice data such that when a particular type of connection is detected, space is available in non-volatile memory, etc., recorded voice data is automatically transferred.

The groupware server 36 can also be provided with a set of rules for transferring voice data to attendees connected thereto. For example, the groupware server 36 can be configured to transfer all voice data to desktop computers 44 when the calendar object representing the calendar event is updated thereon, whereas only the updated calendar object may be transferred to mobile devices 24. In another scenario, the groupware server 36 can keep records for each mobile device 24 regarding capabilities, so that voice data is only transmitted to those mobile devices 24 that are capable of playing the voice data.

The mobile device 24 can be permitted to download the voice data for review and subsequently purge the voice data without disassociating the voice data from the calendar event or deleting the voice data from the groupware server 36. The groupware server 36 can be configured to convert the voice data into text via a speech-to-text converter and then associate the text with the calendar object or modify the calendar object itself to include converted text.

The mobile device 24 can be configured to record voice data from telephone conversations during calendar events much in the same manner as other voice data can be recorded. The mobile device 24 can also be configured to stream the voice data as it is being recorded to the groupware server 36. In addition, the voice data can be streamed from the groupware server 36 to the mobile device 24.

In some cases, it can be desirable to provide non-repudiation of the voice data recorded by a mobile device 24. In such cases, another attendee can be asked to confirm that the voice data recorded is accurate. Alternatively, the mobile device 24 that is to record the voice data can transmit a request to another mobile device 24 prior to commencement of recording to approve or "sign" the request to permit the mobile device 24 to record the voice data. The signature of the voice data can also occur after the voice data has been recorded. In this manner, the recording of additional voice data cannot be included in the recorded voice data corresponding with the calendar event.

Although particular embodiments have been described, those of skill in the art will appreciate that variations and modifications may be made without departing from the spirit and scope thereof as defined by the appended claims.

## Claims

1. A method of registering voice data with a calendar event, comprising:
recording voice data using a mobile device; and
associating the recorded voice data with the calendar event using said mobile device.

2. The method of claim 1, further comprising:
prompting a user to confirm that voice data is to be recorded during said calendar event once said calendar event has been launched by said mobile device; and
performing said recording and associating when voice data recording is confirmed.

3. The method of claim 2, further comprising:
prompting the user to confirm that recorded voice data is to be associated with said calendar event; and
peforming said associating when calendar event association is confirmed.

4. The method of claim 3, wherein said voice data recording prompting and voice data associating prompting are both performed prior to said voice data recording.

5. The method of any one of claims 1 to 4, wherein said voice data associating comprises updating a calendar object representing the calendar event to include a link to the recorded voice data.

6. The method of claim 5, further comprising:
communicating said updated calendar object and recorded voice data from said mobile device to a remote server.

7. The method of claim 6, wherein said communicating is performed over a wireless and/or wired network.

8. The method of claim 7, further comprising:
prompting the user to confirm that the updated calendar object and recorded voice data is to be communicated; and
performing the communicating when confirmed.

9. The method of any one of claims 6 to 8, wherein said remote server stores said voice data and updates the calendar object to reflect its location.

10. The method of any one of claims 6 to 9, further comprising:
communicating said updated calendar object from said remote server to other devices.

11. The method of claim 10, wherein said remote server communicates said updated calendar object to other mobile devices.

12. A mobile device for registering voice data with a calendar event, comprising:
a microphone for receiving audio signals during the calendar event;
a processing unit for converting input audio signals received from said microphone into digital voice data; and
memory for storing said voice data and a calendar object representing said calendar event during which said voice data was recorded,
wherein said processing unit is configured to associate said voice data with said calendar event.

13. A mobile device according to claim 12, further comprising:
an output interface, said processing unit configured to condition said output interface to prompt a user of said mobile device to confirm whether voice data is to be recorded during said calendar event.

14. A mobile device according to claim 13, further comprising:
an input interface for receiving confirmation input from said user.

15. A mobile device according to any one of claims 12 to 14, further comprising:
a network interface for communicating said voice data to a remote server.

16. A system for registering voice data with a calendar event, comprising:
a mobile device for registering voice data and associating registered voice data with the calendar event by updating a calendar object; and
a server for receiving said registered voice data and said calendar object from said mobile device, said server being configured to update said calendar object and make said registered voice data associated with said calendar event available to others.

17. An operating system for a mobile device, the operating system comprising hardware on which software resides, said software being executable by the hardware to cause the mobile device to implement the method of any one of claims 1 to 11.
